# EUROPÄISCHE PATENTSCHRIFT

(11) **EP 4 284 681 B1**
(45) Veröffentlichungstag und Bekanntmachung des Hinweises auf die Patenterteilung: **11.03.2026**
(21) Anmeldenummer: 22701594.8
(22) Anmeldetag: 24.01.2022
(51) Int. Cl.: B60Q 3/217, B60Q 1/32, F21S 43/20, F21S 43/31, F21S 43/40

(54) **HOLOGRAPHISCHE EINSTIEGSLEUCHTE IN EINEM TÜRRAHMEN**
HOLOGRAPHIC ENTRY LIGHT IN A DOOR FRAME
LUMIÈRE D'ENTRÉE HOLOGRAPHIQUE DANS UN CADRE DE PORTE

(30) Priorität: 01.02.2021 DE 102021200896; 15.07.2021 DE 102021207573
(43) Veröffentlichungstag der Anmeldung: 06.12.2023
(73) Patentinhaber: Carl Zeiss Jena GmbH, 07745 Jena (DE)
(72) Erfinder: ERLER, Christoph, 07745 Jena (DE); KÜHL, Siemen, 07745 Jena (DE)
(74) Vertreter: Leifgen, Matthias
(86) Internationale Anmeldenummer: PCT/EP2022/051423
(87) Internationale Veröffentlichungsnummer: WO 2022/161888

(56) Entgegenhaltungen:
- EP-A1- 2 028 046
- EP-A1- 3 616 994
- DE-A1- 102009 020 333
- DE-A1- 102015 109 381
- DE-U1- 202014 101 678
- FR-A- 1 518 902
- US-A1- 2020 166 195
- US-A1- 2020 377 040

## Beschreibung

Die Erfindung betrifft einen Türrahmen für ein Fahrzeug, aufweisend eine holographische Einstiegsleiste in einem unteren Türrahmenabschnitt und eine geeignete Beleuchtungsanordnung in einem seitlichen Türrahmenabschnitt.

### Hintergrund und Stand der Technik:

Fahrzeuge, insbesondere PKWs, weisen oft im Eingangsbereich im unteren Türrahmenabschnitt eine sogenannte Einstiegsleiste auf, die bspw. aus Plastik und/oder Metall bestehen kann. Die Einstiegsleiste kann zum einen eine etwas robustere Zone des Einstiegsbereichs sein, die diesen vor Beschädigungen und starker Verschmutzung, z. B. durch das Ein- und Aussteigen und durch Witterungseinflüsse bei geöffneter Türe schützt. Häufig soll gerade bei Premiumfahrzeugen durch die Einstiegsleiste der einsteigenden Person eine Hochwertigkeit suggeriert werden, indem hochwertig anmutende Materialien verwendet werden und bspw. das Markenzeichen des Fahrzeugs oder Herstellers dargestellt wird. Diese ästhetische Funktion könnte durch Verwendung von Hologrammen im Bereich der Einstiegsleiste weiter verbessert werden.

Auch ist der Einstiegsbereich eines Fahrzeugs häufig etwas erhöht, aus Gründen der Fahrzeugsicherheit und des Witterungsschutzes. Diese Erhöhung kann jedoch eine gefährliche Stolperfalle bei Ein- und Aussteigen darstellen, welche gerade für ältere Personen oder Personen mit eingeschränkter Sehfähigkeit problematisch sein kann, weil sie eine gewisse Beweglichkeit erfordert und oftmals außerhalb des Sichtfeldes liegt. Auch zur Behebung dieses Problems ist eine Verwendung von Hologrammen im Bereich der Einstiegsleiste eine Lösung, da das Hologramm ein Bild außerhalb, insbesondere oberhalb der Einstiegsleiste erzeugen kann und das Sichtfeld durch die Beugung des Hologrammes beeinflussbar ist. So kann die Sichtbarkeit der Einstiegsleiste deutlich erhöht werden und die Gefahr von Unfällen minimiert werden. Problematisch für die Verwendung von Hologrammen, welche eine gewisse optische Qualität aufweisen sollen und die zuvor dargestellten Probleme lösen können ist der geringe vorhandene Bauraum im Bereich der Einstiegsleiste. Zum einen muss der untere Türrahmenabschnitt zur Herstellung der Unfallsicherheit massiv genug gestaltet sein, zum anderen soll die Tür mit dem Türrahmen in diesem Bereich möglichst bündig abschließen. Daher sind einer möglichen Beleuchtung eines Hologramms in der Einstiegsleiste Grenzen gesetzt, da eine Beleuchtung, welche Teil der Einstiegsleiste ist, zu viel Platz benötigen würde und die elektrischen Anschlussmöglichkeiten in diesem Bereich ebenfalls beschränkt sind. Es ist in diesem Bereich kein Platz für die Unterbringung bspw. von LED mit Linse und Beibehaltung eines zur Beleuchtung benötigten Abstandes zur holografischen Struktur in der Einstiegsleiste vorhanden. Auch sollen holografische Einstiegsleisten bei bereits fertig gestalteten Fahrzeugen nachgerüstet werden können, wodurch ebenfalls strenge Randbedingungen gegeben sind.

US 2020/0166195 A1 beschreibt eine Möglichkeit zur Anzeige von Informationen in einem Fahrzeug. Dafür wird ein optisches Gitter, bspw. ein holographisches Gitter, durch eine Lichtquelle beleuchtet.

### Aufgabe der Erfindung:

Es ist eine Aufgabe der Erfindung, einen Türrahmen ohne die Nachteile des Standes der Technik bereitzustellen. Insbesondere ist es Aufgabe der Erfindung, einen Türrahmen bereitzustellen, welcher die Sicherheit bei Ein- und Aussteigen sowie die ästhetische Wirkung des Fahrzeugs erhöht, ohne die Unfallsicherheit zu beeinträchtigen und die Kosten und den Aufwand bei der Herstellung zu erhöhen.

### Zusammenfassung der Erfindung:

Die Aufgabe wird durch die Merkmale des unabhängigen Anspruchs gelöst. Bevorzugte Ausführungsformen der Erfindung sind in den abhängigen Ansprüchen beschrieben.

Die Erfindung betrifft einen Türrahmen für ein Fahrzeug, aufweisend eine holographische Einstiegsleiste in einem unteren Türrahmenabschnitt, wobei die holographische Einstiegsleiste ein flächiges Element mit einer Dicke senkrecht zur flächigen Ausdehnung von maximal 3 mm umfasst, welches mindestens eine flächige, reflexive holografische Struktur aufweist, die eingerichtet ist zur Erzeugung einer holographischen Leuchtfunktion in einem Sichtbereich. Flächig bedeutet bevorzugt, dass eine Ausdehnung in die in einer zweidimensionalen Fläche liegenden Richtungen deutlich größer ist als in eine senkrecht zu dieser Fläche liegenden Richtung.

Die flächige Ausdehnung der holographischen Einstiegsleiste kann bspw. in Längsrichtung zwischen 5 cm und 30 cm, bevorzugt zwischen 10 cm und 25 cm liegen. In Querrichtung kann die Ausdehnung bspw. zwischen 1 cm und 7 cm, bevorzugt zwischen 2 cm und 5 cm liegen. Eine beispielhafte Ausdehnung kann 20 cm in Längsrichtung und 5 cm in Querrichtung betragen.

Die holografische Struktur ist vorzugsweise flächig und liegt in einer Ebene mit der zweidimensionalen Fläche der holographischen Einstiegsleiste bzw. parallel dazu.

Die flächige Ausdehnung der holographischen Struktur kann im Bereich der Ausdehnung der Einstiegsleiste liegen und vorzugsweise etwas kleiner sein. Vorzugsweise nimmt die holgrafische Struktur mindestens 20 % der Fläche der Einstiegleiste, stärker bevorzugt mindestens 30 % der Fläche der Einstiegsleiste, noch stärker bevorzugt mindestens 40 % der Fläche der Einstiegsleiste und am stärksten bevorzugt mindestens 50 % der Fläche der Einstiegsleiste ein. Die Struktur kann bis zu der gesamten Fläche der Einstiegsleiste einnehmen. Eine beispielhafte Ausdehnung kann 20 cm in Längsrichtung und 5 cm in Querrichtung betragen. Eine beispielhafte Ausdehnung kann 20 cm in Längsrichtung und 5 cm in Querrichtung betragen eine andere beispielhafte Ausdehnung der Struktur kann 10 cm in Längsrichtung und 2,2 cm in Querrichtung betragen.

Die holographische Einstiegsleiste kann transparent für sichtbares Licht sein, und insbesondere einen transparenten Körper umfassen.

Die holographische Struktur kann unterhalb der oberen Außenfläche der Einstiegsleiste angeordnet vorliegen, wobei die Einstiegsleiste dabei transparent sein sollte, so dass holographische Struktur von Beleuchtungslicht erreicht werden kann und dieses auch wiederum aus der Einstiegsleiste heraus reflektieren kann.

Die holographische Struktur kann sich direkt an oder auf der oberen Außenfläche der Einstiegsleiste befinden, wobei die Einstiegsleiste in diesem Fall nicht transparent für sichtbares Licht sein muss.

Die Einstiegsleiste kann einen Polymerkörper umfassen. Dieser kann für sichtbares Licht transparent oder intransparent sein.

Die reflexive holografische Struktur ist insbesondere eingerichtet zur Erzeugung einer holographischen Leuchtfunktion bei einer Beleuchtung.

Eine reflexive holografische Struktur reflektiert vorzugsweise das auf sie einfallende Licht, so dass die Quelle der Beleuchtung auf der Seite des Betrachters der durch die holographische Struktur erzeugte Leuchtfunktion sein kann. Eine reflektive holographische Struktur kann vorteilhafterweise auch unter Weißlichtbeleuchtung die holografische Leuchtfunktion (nur) bei der gewünschten Farbe erzeugen, weil bevorzugt nur bestimmte Wellenlängenbereiche die Bragg-Bedingung der reflexiven holografischen Struktur erfüllen.

Sichtbereich und Sichtfeld sind vorzugsweise synonym verwendbare Ausdrücke.

Die reflexive holografische Struktur ist eingerichtet zur Erzeugung einer holographischen Leuchtfunktion in einem Sichtbereich bedeutet bevorzugt, dass die Struktur das Beleuchtungslicht so beugt, dass ein erzeugtes Bild in diesem Sichtbereich erkennbar ist.

Bevorzugt ist der Sichtbereich ein abgrenzbares Volumen, welches um mehrere Zentimeter (cm), bevorzugt um mehrere Dezimeter (dm) und manchmal auch um mehrere Meter von der Einstiegsleiste entfernt liegt.

Ein solcher Türrahmen kann auf einfache Art und Weise einen ästhetischen Eindruck eines Fahrzeugs erhöhen sowie die Sicherheit beim Ein- und Aussteigen verbessern. Dabei nimmt es nur wenig Bauraum ein.

In einer bevorzugten Ausführungsform der Erfindung umfasst die holografische Struktur ein Volumenhologramm, welches bevorzugt als Hologrammstack oder als gemultiplextes Hologramm vorliegt. Ein Volumenhologramm weist bevorzugt eine Dicke zwischen 5 µm und 200 µm auf.

Vorzugsweise ist mehr als eine holografische Struktur umfasst, z. B. eine für einen grünen Spektralbereich, eine für einen blauen Spektralbereich und eine für einen roten Spektralbereich, um ein weiß erscheinendes Bild als holografische Leuchtfunktion zu erzeugen.

In einem Hologrammstack sind die holografischen Strukturen übereinander, insbesondere stapelweise übereinander angeordnet.

Vorzugsweise weist die holographische Leuchtfunktion eine einzige Farbe auf, wobei Farbe in diesem Zusammenhang bevorzugt nicht unbedingt im spektralen Sinn, sondern gemäß dem Farbempfinden des Menschen gemeint ist. Bspw. ist in diesem Sinne nicht nur, rot oder blau, sondern auch weiß eine einzige Farbe. Dies kann aus ästhetischen Gründen und zum Erfüllen einer Warnfunktion bevorzugt sein.

In einer alternativen Ausgestaltung liegen die holografischen Strukturen in einer einzigen holografischen Struktur vor, insbesondere in einer sogenannten Hologrammfolie, in der sie gemeinsam belichtet wurden. Eine solche holografische Struktur wird vorzugsweise auch als sogenanntes Multiplexhologramm bezeichnet.

In einer weiteren bevorzugten Ausführungsform der Erfindung umfasst die holografische Struktur ein Prägehologramm.

Prägehologramme sind bevorzugt Phasenhologramme. Vorzugsweise weist das Prägehologramm Vertiefungen auf, die einen Phasenunterschied des reflektierten Lichtes erzeugen. Diese sind bspw. mit einem Stempel in das Material gedrückt, können aber durch unterschiedliche Belichtung geeigneten Materials entstehen. Ein Phasenhologramm kann vorzugsweise ebenso eine örtliche Modulation des Brechungsindexes aufweisen, welche z.B. in Silberhalogenidfilmen erzeugt werden.

Vorzugsweise ist ein Prägehologramm ein reflektives Reliefpattern, es kann sich insbesondere um eine metallisierte diffrakteren Reliefstruktur handeln.

Das Prägehologramm kann ein besonders "breitbandiges" Hologramm sein, was wiederum in manchen Anwendungen, besonders bei einer Beleuchtung durch Tageslicht und/oder Umgebungslicht, vorteilhaft sein kann, da die vorhandene Lichtintensität auch bei schwacher Beleuchtung besser ausgenutzt werden kann. Dabei wird vorzugsweise ein Kompromiss zwischen Effizienz und optischer Qualität gemacht bzw. ein entsprechendes Bildmotiv verwendet.

In einer weiteren bevorzugten Ausführungsform der Erfindung ist das Prägehologramm in einem Element umfasst, welches eingerichtet ist, einen Teil des sichtbaren Spektrums, der nicht zur Erzeugung der holographischen Lichtfunktion beitragen soll, überwiegend zu absorbieren.

Es kann sich beispielsweise um eine farbige Abdeckung (z. B. rot) eines Prägehologramms handeln, welche für diese Farbe, z. B. für rot transparent ist, jedoch sichtbare Spektren bei anderen Farben im Wesentlichen oder teilweise absorbiert. So wird die Abdeckung als Filter für das Beleuchtungslicht, welche andere Farbbereiche in seinem Spektrum enthalten kann, so dass die unter der Beleuchtung erzeugte Leuchtfunktion im Wesentlichen nur die Farbe der Abdeckung aufweist. Dies ist eine besonders einfache und preisgünstige Lösung.

In einer weiteren bevorzugten Ausführungsform der Erfindung umfasst die Erzeugung einer holographischen Leuchtfunktion die Darstellung eines virtuellen, in-plane und/oder reellen Bildes, insbesondere eines reellen Bildes in einer Höhe zwischen 0,5 cm und 5 cm oberhalb der holographischen Einstiegsleiste.

Diese Höhe kann eine gute Warnfunktion bei Ein- und Aussteigen erzeugen und sorgt für einen verbesserten ästhetischen Eindruck.

Das Bild kann insbesondere ein Zeichen oder einen Schriftzug umfassen, welcher insbesondere dreidimensional erscheint und bevorzugt über der Einstiegsleiste zu schweben scheint.

In einer weiteren bevorzugten Ausführungsform der Erfindung ist die holografische Struktur, welche bevorzugt ein Prägehologramm ist, welches insbesondere in einem Element gemäß vorstehender Beschreibung umfasst ist, eingerichtet für die Erzeugung der holographischen Leuchtfunktion bei einer Beleuchtung durch Tages- und/oder Umgebungslicht, insbesondere in einem Bereich von 420 nm bis 700 nm bevorzugt 620 nm bis 700 nm.

Tageslicht ist insbesondere durch die Sonne erzeugtes Licht am Tag, z. B. mittags, bspw. im Sommer oder im Winter.

Umgebungslicht kann insbesondere zusätzlich oder ausschließlich durch künstliche Lichtquellen erzeugt sein, bspw. eine Standard-Innenraumbeleuchtung im PKW.

Wie bereits beschrieben muss die Effizienz der holografischen Struktur dann bei einem breiten Spektralbereich gegeben sein, wozu insbesondere das Prägehologramm geeignet ist. Breitbandiges Sonnenlicht würde bei einem Volumenhologramm, welches bspw. für 650nm +/-5nm ausgelegt ist, stark gefiltert. Ist das Hologramm ein Volumenhologramm, dann wäre es bevorzugt nur für diese 650nm +/- 5nm ausgelegt und würde z.B. bei 620nm nicht mehr effizient beugen.

Ein Prägehologramm (vorzugsweise auch Reliefhologramm genannt), würde jedoch auch bei 620nm effizient beugen, bevorzugt nur unter einem anderen Winkel. Verbunden mit einer oben beschriebenen Abdeckung, welche z. B. aus Plastik wäre und oben auf dem Reliefhologramm aka Prägehologramm aufgebracht wäre, wäre das Prägehologramm dann z. B. (bei einer roten Abdeckung) immer rot.

Ein solcher Türrahmen benötigt keine eigene Beleuchtungsanordnung für die Einstiegsleiste.

Gemäß der Erfindung weist der Türrahmen mindestens eine in mindestens einem seitlichen Türrahmenabschnitt angeordnete Beleuchtungsanordnung auf, welche eingerichtet ist zu einer Beleuchtung der holographischen Einstiegsleiste, umfassend mindestens eine Lichtquelle, wobei die holografische Struktur eingerichtet ist für Erzeugung der holographischen Leuchtfunktion bei der Beleuchtung durch die Beleuchtungsanordnung.

Die Beleuchtungsanordnung befindet sich dabei oberhalb und seitlich von der holographischen Einstiegsleiste, so dass eine Beleuchtung unter einem schrägen Winkel stattfindet. Vorzugsweise ist die Beleuchtungsanordnung eingerichtet zu einer Beleuchtung der holographischen Einstiegsleiste, das bedeutet vor allem, von der Ausrichtung, der Intensität, der Strahlungsrichtung und/oder dem Winkelspektrum des Beleuchtungslichtes realisiert, dass die holographische Einstiegsleuchte beleuchtet wird.

Eine Strahlungsrichtung oder Hauptstrahlrichtung der Beleuchtung ist bevorzugt eine Richtung, in der eine maximale oder über alle Richtungen gemittelte Intensität des Lichtstrahls vorliegt. Die Begriffe bezeichnen dabei bevorzugt den zentralen Strahl eines Strahlenbündels bzw. dessen Richtung. Die Strahlungsrichtung gibt dabei insbesondere die Richtung des Strahlenbündels an. Im Falle eines kollimierten Strahlenbündels verlaufen die übrigen Strahlen des Strahlenbündels im Wesentlichen parallel zur Hauptstrahlrichtung, so dass die Hauptstrahlrichtung vorzugsweise repräsentativ für die Strahlen eines Strahlenbündels ist. Im Falle eines nicht kollimierten Strahlenbündels spannen die Strahlen des Strahlenbündels einen definierten Raumwinkel ein, in dessen Zentrum die Hauptstrahlrichtung verlauft.

Schwerpunktswinkel hat vorzugsweise eine analoge Bedeutung, wobei bevorzugt die Strahlungsrichtung von der holografischen Struktur aus als Winkel mit der Flächennormalen der holografischen Struktur gemessen wird.

Dass die holografische Struktur eingerichtet ist für Erzeugung der holographischen Leuchtfunktion bei der Beleuchtung durch die Beleuchtungsanordnung bedeutet vor allem, dass die reflexive holographische Struktur vom Akzeptanzspektrum sowie vom Akzeptanzwinkel und dem Akzeptanzwinkelspektrum auf die Beleuchtung der Beleuchtungsanordnung abgestimmt ist, so dass das Spektrum, der Beleuchtungswinkel (bzw. Schwerpunktswinkel) sowie das Winkelspektrum der Beleuchtung durch die Beleuchtungsanordnung die holographische Leuchtfunktion effektiv und/oder effizient hervorrufen kann. Akzeptanzspektrum sowie Akzeptanzwinkel und Akzeptanzwinkelspektrum der reflexiven holographische Struktur und Spektrum, Beleuchtungswinkel sowie Winkelspektrum der Beleuchtung durch die Beleuchtungsanordnung stimmen vorteilhafterweise überein oder überlappen. So kann eine effektive und/oder effiziente Beleuchtungseinrichtung bereitgestellt werden.

In einer weiteren bevorzugten Ausführungsform der Erfindung ist der seitliche Türrahmenabschnitt ein vorderer seitlicher Türrahmenabschnitt, insbesondere eine Verlängerung einer A-Säule zum Fahrzeugboden hin oder ein unterer Abschnitt der B-Säule.

Vorne und hinten sind vorzugsweise in Bezug auf die Fahrtrichtung definiert. Bei einer vorderen Tür ist vorzugsweise eine Verlängerung einer A-Säule zum Fahrzeugboden hin ein vorderer seitlicher Türrahmenabschnitt, bei einer hinteren Tür vorzugsweise ein unterer Abschnitt der B-Säule. Der seitliche Türrahmenabschnitt ist vorzugsweise besonders gut geeignet für eine Unterbringung der Beleuchtungsanordnung. Diese kann sehr kompakt gehalten werden und ist gleichzeitig nur bei geöffneter Tür sichtbar und ansonsten geschützt.

In einer weiteren bevorzugten Ausführungsform der Erfindung ist der seitliche Türrahmenabschnitt ein hinterer seitlicher Türrahmenabschnitt ist, insbesondere ein unterer Abschnitt einer B-Säule zum Fahrzeugboden hin oder eine Verlängerung einer C-Säule zum Fahrzeugboden hin. Bei einer vorderen Tür ist vorzugsweise ein unterer Abschnitt der B-Säule ein hinterer seitlicher Türrahmenabschnitt und bei einer hinteren Tür vorzugsweise eine Verlängerung einer C-Säule zum Fahrzeugboden hin. Der hintere Türrahmenabschnitt ist vorteilhaft für eine verminderte Verschmutzung der Beleuchtungsanordnung und eine leichtere Wartung.

In einer weiteren bevorzugten Ausführungsform der Erfindung sind zwei Beleuchtungsanordnungen umfasst, wobei jeweils eine in einem vorderen seitlichen Türrahmenabschnitt und eine in einem hinterem seitlichen Türrahmenabschnitt umfasst ist. So kann eine besonders intensive und verbesserte Beleuchtung realisiert werden.

In einer bevorzugten Ausführungsform der Erfindung umfasst der Türrahmen mindestens eine Beleuchtungsanordnung mit mindestens einer separat schaltbaren Lichtquelle, welche eingerichtet ist für eine animierte holographische Leuchtfunktion.

Mit einer geeigneten Kombination wäre auch die Darstellung einer Animation bzw. eine animierten (dynamisch sich ändernden) holographischen Leuchtfunktion monochrom oder (mehr) farbig oder weiß möglich.

Diese Ausführungsform ist insbesondere geeignet bei der Verwendung zweier Beleuchtungsanordnungen, vorzugsweise eine in einem vorderen seitlichen Türrahmenabschnitt und eine in einem hinteren seitlichen Türrahmenabschnitt. Dabei kann jede Beleuchtungsanordnung mehrere separat schaltbare Lichtquellen umfassen.

Vorzugsweise ist die Helligkeit der Lichtquelle einstellbar. So können besondere Leuchteffekte und Warnfunktionen realisiert werden, insbesondere in Verbindung mit der vorstehend genannten Ausführungsform.

Für die vorstehend genannten Ausführungsformen kann eine Steuereinrichtung, bspw. in Form einer integrierten Schaltung umfasst sein.

Gemäß der Erfindung sind Beleuchtungsanordnung und holographische Einstiegsleiste zueinander angeordnet für die Beleuchtung der holographischen Einstiegsleuchte unter einem Schwerpunktswinkel, welcher einem Brewsterwinkel der holographischen Einstiegsleiste entspricht oder weniger als 10°, insbesondere weniger als 5° vom Brewsterwinkel abweicht.

Durch die Beleuchtung mit dem Brewsterwinkel kann vorzusgweise eine unerwünschte, ungebeugte Reflektion an der Oberfläche der holographischen Einstiegsleuchte vermindert werden. Auch bei unpolarisiertem Licht wird so vorzugsweise zumindest eine Reflektion des parallel zur Einfallsebene polarisiertem Lichtes im Wesentlichen unterdrückt.

Verwendet man etwa LEDs, die unpolarisiert sind als Lichtquelle, liegt vorzugsweise eine 50:50 Mischung aus senkrecht (TE) und parallel (TM) polarisiertem Licht vor. Bei dem Brewsterwinkel wird vorzugsweise von 50% des Lichtes (der TM, also parallel zur Einfallsebene polarisierte Anteil) komplett nicht reflektiert, sondern dringt ins Medium ein, z. B. die oben beschriebene Plastikabdeckung des Prägehologramms.

Vorzugsweise ist die Gesamtausbeute des Systems, also insbesondere die Summe TE + TM wichtig. Vorteilhafterweise wählt man den Einfallswinkel dergestalt, dass die Summe der Reflexionskoeffizienten aus TE + TM möglichst gering ist.

Im Bereich 0...20° Einfallswinkel (Schwerpunktswinkel) wären bspw. 4% ideal. Dann müsste aber das Licht von oben kommen, was bautechnische Nachteile hat, z. B: große Distanz zwischen Beleuchtungsanordnung und Einstiegsleiste. Bei bevorzugt 70° Einfallswinkel wird bspw. über 30% reflektiert, was unerwünscht wäre. Der Bresterwinkel liegt bevorzugt bei unpolarisiertem Licht dazwischen - hier wäre wenigstens TM bei 0% - und stellt somit einen guten Kompromiss bei unpolarisisertem Licht dar.

Für die Festlegung des Brewsterwinkels kann von einer Umgebung der Einstiegsleiste mit Luft unter Standardbedingungen insbesondere Luft gemäß ISO 2533 ausgegangen werden.

In einer weiteren bevorzugten Ausführungsform der Erfindung ist die Beleuchtungsanordnung eingerichtet für eine Beleuchtung der holografischen Struktur mit einem Winkelspektrum um einen Schwerpunktwinkel, so dass mindestens 30% der Lichtstrahlen der Beleuchtungsanordnung, insbesondere mindestens 40 % der Lichtstrahlen der Beleuchtungsanordnung, die holografischen Struktur ausleuchten, wobei bevorzugt eine Intensitätsverteilung des Beleuchtungslichtes homogen ist und insbesondere ein Verhältnis von minimaler Intensität (bzw. minimaler Beleuchtungs- oder Bestrahlungsstärke) zu maximaler Intensität (bzw. maximaler Beleuchtungs- oder Bestrahlungsstärke) größer als 0,8 aufweist.

So kann eine verbesserte holographische Leuchtfunktion bereitgestellt werden. Es ist oftmals besonders erwünscht, dass die holographische Struktur möglichst homogen ausgeleuchtet wird, jedoch wenig unerwünschte "Leuchtflecken" neben der holografischen Struktur im Wesentlichen nicht erzeugt werden.

In einer weiteren bevorzugten Ausführungsform der Erfindung weist die Beleuchtungsanordnung eine strahlformende Komponente auf. So kann eine verbesserte Beleuchtung realisiert werden und bspw. Kollimation, Schwerpunktswinkel und Winkelspektrum vorteilhaft beeinflusst werden.

In einer weiteren bevorzugten Ausführungsform der Erfindung weist die Beleuchtungsanordnung als strahlformende Komponente eine anamorphotische Freiformlinse auf, deren Formgebung sich bevorzugt ergibt durch die Dimensionierung der holografischen Struktur und/oder der Anordnung von Beleuchtungsanordnung und holographischer Einstiegsleuchte zueinander.

Da das Aspektverhältnis von Einstiegsleisten vorzugsweise groß ist (sehr lang, wenig breit), sollte die Strahlformungsoptik für eine hohe Effizienz anamorphotische Eigenschaften haben (d.h. bevorzugt unterschiedliche Brennweiten in horizontaler und vertikaler Richtung, d.h. insbesondere unterschiedliche Krümmungen in x- und y-Richtung). Das notwendige Verhältnis ergibt sich vorteilhafterweise aus der Hologrammgröße und dem Winkel, unter dem das Hologramm beleuchtet wird.

Bevorzugt handelt es sich um eine Freiformlinse, welche o.g. anamorphotische Eigenschaften besitzt und nicht notwendigerweise Symmetrien bezogen auf beliebige Achsen aufweisen muss.

Die Linse kann gewisse Symmetrien aufweisen, diese können jedoch wegfallen, wenn eine möglichst homogene Ausleuchtung realisiert werden soll.

Insbesondere durch eine solche Linse kann realisiert werden, dass mindestens 30% der Lichtstrahlen der Beleuchtungsanordnung, insbesondere mindestens 40 % der Lichtstrahlen der Beleuchtungsanordnung, die holografischen Struktur ausleuchten, wobei bevorzugt eine Intensitätsverteilung des Beleuchtungslichtes homogen ist und insbesondere ein Verhältnis von minimaler Intensität (bzw. minimaler Beleuchtungs- oder Bestrahlungsstärke) zu maximaler Intensität (bzw. maximaler Beleuchtungs- oder Bestrahlungsstärke) größer als 0,8 aufweist.

In einer weiteren bevorzugten Ausführungsform der Erfindung weist die Beleuchtungsanordnung als strahlformende Komponente eine bikonische Linse auf, deren Formgebung sich vorzugsweise ergibt durch die Dimensionierung der holografischen Struktur und/oder der Anordnung von Beleuchtungsanordnung und holographischer Einstiegsleuchte zueinander.

Die Strahlformungsoptik kann eine Linse sein, wobei die Lichtauskoppelseite die Form einer bikonischen Fläche aufweist.

Insbesondere durch eine solche Linse kann realisiert werden, dass mindestens 30% der Lichtstrahlen der Beleuchtungsanordnung, insbesondere mindestens 40 % der Lichtstrahlen der Beleuchtungsanordnung, die holografischen Struktur ausleuchten, wobei bevorzugt eine Intensitätsverteilung des Beleuchtungslichtes homogen ist und insbesondere ein Verhältnis von minimaler Intensität (bzw. minimaler Beleuchtungs- oder Bestrahlungsstärke) zu maximaler Intensität (bzw. maximaler Beleuchtungs- oder Bestrahlungsstärke) größer als 0,8 aufweist.

In einer weiteren bevorzugten Ausführungsform der Erfindung ist die Beleuchtungsanordnung eingerichtet für eine Beleuchtung der holographischen Einstiegsleiste mit einem Winkelspektrum kleiner als 5°, insbesondere kleiner als 2°. So können besonders scharfe Bilder ohne Doppelbilder und Verschmierungen erzeugt werden.

In einer weiteren bevorzugten Ausführungsform der Erfindung umfasst die Beleuchtungsanordnung mindestens eine polarisierte Lichtquelle, bevorzugt mindestens einen Laser oder mindestens eine LED mit einem Polarisationsfilter umfasst, wobei die Polarisation des von der Lichtquelle emittierten Lichtes bevorzugt im Wesentlichen parallel zur Einfallsebene polarisiert ist. Vorzugsweise wird dabei unter einem Brewsterwinkel beleuchtet. Hierdurch können unerwünschte Reflexionen weiter reduziert werden.

In einer weiteren bevorzugten Ausführungsform der Erfindung umfass die Lichtquelle der Beleuchtungsanordnung mindestens eine LED, insbesondere mindestens eine überwiegend nicht polarisierte LED. Diese Ausführungsform ist besonders kostengünstig und leistungsstark.

In einer weiteren bevorzugten Ausführungsform der Erfindung umfasst die Lichtquelle der Beleuchtungsanordnung mindestens eine einfarbige Lichtquelle, welche Licht im Wesentlichen in einem Farbspektrum emittiert.

In einer weiteren bevorzugten Ausführungsform der Erfindung umfasst die Lichtquelle der Beleuchtungsanordnung mindestens eine mehrfarbige Lichtquelle und/oder mehrere untereinander verschiedenfarbige, einfarbige Lichtquellen, so dass Licht in mehr als einem Farbspektrum emittiert wird. So kann z. B. mit einer Kombination aus einer roten (R), einer grünen (G) und einer blauen Lichtquelle (B) weißes Licht realisiert werden.

In einer weiteren bevorzugten Ausführungsform der Erfindung umfasst die Lichtquelle der Beleuchtungsanordnung rotes, grünes und blaues Licht. Dies ist eine besonders einfach zu realisierende Quelle für weißes Licht, welche durch Massenfertigung herstellbar ist.

In einer weiteren bevorzugten Ausführungsform der Erfindung umfasst die Lichtquelle der Beleuchtungsanordnung weißes Licht. Dies ist eine besonders materialsparende Realisierung einer Quelle für weißes Licht.

In einer weiteren bevorzugten Ausführungsform der Erfindung weist die holographische Einstiegsleiste und/oder die holografische Struktur entlang der flächigen Ausdehnung eine rechteckige Form, insbesondere mit einer langen und einer kurzen Seite, auf. Eine solche Einstiegsleiste hat eine besondere ästhetische Wirkung und ist besonders gut geeignet für die holographische Darstellung von Schriftzügen.

In einer weiteren bevorzugten Ausführungsform der Erfindung ist die mindestens eine holographische Struktur eingerichtet, für zumindest einen Teil des von der Lichtquelle emittieren spektralen Bereichs mindestens eine holografische Leuchtfunktion zu erzeugen, wobei bevorzugt verschiedene holografische Strukturen für verschiedene spektrale Bereiche verwendet werden. So kann eine multispektrale Leuchtfunktion mit verbesserter optischer Qualität bereitgestellt werden.

In einer weiteren bevorzugten Ausführungsform der Erfindung sind mehrere verschiedenfarbige Lichtquellen im seitlichen Türrahmenabschnitt übereinander angeordnet und die mindestens eine holografische Struktur ist eingerichtet, die Leuchtfunktion der jeweiligen Lichtquelle bei der jeweiligen Farbe und/oder unter dem jeweiligen Beleuchtungswinkel zu erzeugen. So kann eine besonders schmale Beleuchtungsanordnung realisiert werden. Der Beleuchtungswinkel entspricht bevorzugt dem Schwerpunktswinkel.

In einer weiteren bevorzugten Ausführungsform der Erfindung ist die Beleuchtungsanordnung eingerichtet für eine Beleuchtung der holografischen Struktur mit einem Intensitätsverlauf, insbesondere von der Mitte zum Rand hin und/oder entlang einer langen und/oder kurzen Seite der flächigen holographischen Struktur.

Beispielweise kann ein Intensitätsabfall zu einem Randbereich und/oder einem Mittelbereich der holografischen Struktur hin realisiert werden.

Intensitätsverläufe innerhalb bzw. durch die holografische Struktur können zum einen durch eine Variation der Effizienz der holografischen Struktur gesteuert werden. So kann bspw. von 100% (alles Licht wird ausgekoppelt) bis 50% (die Hälfte des Lichts wird ausgekoppelt) variiert werden. Hierbei "wird" jedoch ein Teil des Lichtes, welches die holografische Struktur ausleuchtet, nicht genutzt, da es nicht gebeugt wird. Zum anderen kann die Beleuchtungsanordnung eingerichtet sein für eine Ausleuchtung der holografischen Struktur mit einem Intensitätsverlauf. Z. B. wird die holografische Struktur durch geeignete Strahlformung inhomogen beleuchtet (z. B. von 100% bis 50% Intensität). Dann weist die holografische Struktur vorzugsweise überall eine Effizienz von 100% auf, d.h. alles Licht wird gebeugt (wenn man bspw. die 0. Ordnung außer Acht lässt). So kann durch diese Ausführungsform, welche auf die Beleuchtung mit einem Intensitätsverlauf ausgerichtet ist, ein definierter Intensitätsverlauf gefordert werden und gleichzeitig die Effizienz maximiert werden. Gleichzeitig können so besondere Leuchtfunktionen erzeugt werden.

In einer weiteren bevorzugten Ausführungsform der Erfindung weist die Beleuchtungsanordnung keine strahlformende Komponente auf, wobei die Lichtquelle mindestens eine LED mit einer Emitterfläche bis zu einer Größe von 1 mm x 1 mm aufweist. Dies ist eine besonders einfache Ausführungsform mit einer im Ergebnis immer noch guten Ausleuchtung und optischen Qualität.

In einer weiteren bevorzugten Ausführungsform der Erfindung ist der Sichtbereich angeordnet für die Sichtbarkeit der holografischen Leuchtfunktion durch den Fahrer, den Beifahrer, eine in das Fahrzeug einsteigende Person und/oder eine aus dem Fahrzeug aussteigende Person. So kann die Wirkung der Einstiegsleiste durch eine gute Sichtbarkeit der holographischen Leuchtfunktion besonders hoch sein.

Insbesondere sind mehrere Sichtbereiche umfasst, z. B. für die Sichtbarkeit der holografischen Leuchtfunktion durch den Fahrer, den Beifahrer, eine in das Fahrzeug einsteigende Person und/oder eine aus dem Fahrzeug aussteigende Person. Dabei können auch für verschiedene Sichtbereiche unterschiedliche Motive angezeigt werden, z. B. durch verschiedene holografische Strukturen, z. B. in einem Stack oder durch ein Multiplexhologramm.

In einer weiteren bevorzugten Ausführungsform der Erfindung sind der Türrahmen und die Beleuchtungsanordnung eingerichtet für ein Einschalten der Lichtquelle bei geöffneter Tür und ein Ausschalten der Lichtquelle bei geschlossener Tür. Dies kann bspw. mit Hilfe von Sensoren und einer integrierten Schaltung realisiert werden. So wird die Effizienz erhöht und die Langlebigkeit der Beleuchtungsanordnung verbessert.

In einer weiteren bevorzugten Ausführungsform der Erfindung weist die Beleuchtungsanordnung und/oder die holographische Einstiegsleiste ein Verschmutzungsschutzelement gegen Verschmutzung bei verschlossener Tür auf, insbesondere eine Gummilippe und/oder eine Gummischürze, welche die Beleuchtungsanordnung und/oder die holographische Einstiegsleiste bei geschossener Tür zumindest teilweise abdeckt. Gummilippe und/oder Gummischürze sind vorzugsweise so gestaltet, dass sie bei geschlossener Tür die Beleuchtungsanordnung und/oder die holographische Einstiegsleiste verschmutzungsdicht abdecken, bei geöffneter Tür jedoch freigeben. Diese Ausführungsform ist besonders wartungsarm.

Bevorzugt kann beim Öffnen die Gummilippe bzw. die Gummischürze über die Beleuchtungsanordnung und/oder die holographische Einstiegsleiste "wischen" und so eine Reinigung erzielen.

In einer weiteren bevorzugten Ausführungsform der Erfindung ist die Oberfläche der holographische Einstiegsleiste und/oder der Beleuchtungsanordnung eingerichtet für einen Lotoseffekt gegen Verschmutzung der Oberfläche.

Als Lotoseffekt wird bevorzugt die Eigenschaft einer geringen Benetzbarkeit einer Oberfläche bezeichnet, wie sie bei der Lotospflanze bekannt ist. Dies kann bspw. durch wasserabweisender mikro- und/oder nanostrukturierte Oberflächen erreicht werden. Hierdurch kann eine verbesserte Wartungsarmut und eine lange Lebensdauer realisiert werden.

Weiterhin hierin beschrieben ist eine holographische Einstiegsleiste, eingerichtet für eine Verwendung in einem Türrahmen wie in diesem Dokument beschrieben.

Dem Fachmann ist ersichtlich, dass Vorteile, Definitionen und Ausführungsformen des erfindungsgemäßen Türrahmens ebenso für die hierin beschriebene Einstiegsleiste gelten.

Weiterhin hierin beschrieben ist ein System aus holographischer Einstiegsleiste und Beleuchtungsanordnung, eingerichtet für eine Verwendung in einem Türrahmen wie in diesem Dokument beschrieben.

Dem Fachmann ist ersichtlich, dass Vorteile, Definitionen und Ausführungsformen des erfindungsgemäßen Türrahmens und/oder der hierin beschriebenen Einstiegsleiste ebenso für das hierin beschriebene erfindungsgemäße System gelten.

### Beschreibung der Erfindung:

Die Erfindung soll im Folgenden unter Verweis auf weitere Abbildungen und Beispiele erläutert werden. Die Beispiele und Abbildungen dienen der Illustration bevorzugter Ausführungsform der Erfindung, ohne diese zu beschränken.
- Die Einstiegsleiste wird nur sichtbar, wenn die Tür geöffnet wird.
- Türrahmen und Einstiegsleiste sind zueinander immer statisch - nur die Türe bewegt sich relativ zu den beiden.
- Im Türrahmen sollten sich eine LED oder mehrere LED mit (oder ohne) geeigneter Strahlformungsoptik unterbringen lassen. Die Strahlformungsoptik sollte so angepasst sein, dass das Hologramm möglichst optimal ausgeleuchtet wird. Sind diese LED's dann RGB dann fällt weißes Licht auf das Hologramm und das Hologramm kann ein weißes Motiv wiedergeben.
- Die Eyebox des Hologramms kann auf den Fahrer bzw. Beifahrer bzw. eine außerhalb des Fahrzeugs sich befindliche Person (vor der Tür stehende Person) ausgerichtet sein.
- Die LED's könnten nur dann angehen, wenn die Tür aufgemacht wird.
- Um ein weißes Motiv holographisch darstellen zu können, muss die holographische Struktur für mindst. 3 Farben als RGB-Hologramm ausgelegt werden.
- Um eine Schwebehöhe zu ermöglichen (d.h. das holographische Motiv soll ein paar cm über der eigentlichen Einstiegsleiste schweben) und gleichzeitig eine saubere Motivdarstellung zu ermöglichen, ist eine definierte Ausleuchtung des Hologramms erforderlich.
- Der aktuelle Bauraum (3mm-Bautiefe) gibt einen derartigen Platz für eine komplexe Ausleuchtung innerhalb der Einstiegsleiste nicht her.
- LEDs zur Beleuchtung befinden sich im Türrahmen.
- Die LEDs können monochromatisch sein, RGB-LEDs oder weiße LEDs sein.
- Die Anordnung kann eine monochromatische LED oder mehrere monochromatische LEDs, eine RGB-LED oder eine weiße LED umfassen, um auch mehrere Farben bzw. die Farbe Weiß darzustellen.
- Die LEDs sind so angeordnet, dass das Hologramm unter einem Winkel ausgeleuchtet wird, der dem Brewsterwinkel ϑ_{B} (alternativ ϑ_{B} ± 5° oder ϑ_{B} ± 10°) entspricht. (→ Schwerpunktwinkel). Bei der Belichtung der Hologramme ist diese Anordnung vorteilhaft, da dadurch störende Reflexe minimiert werden können (und maximal viel Licht in das Hologrammaterial eindringen kann).
- Bei vertikaler Anordnung mehrerer LEDs ergeben sich unterschiedliche Schwerpunktswinkel für die Hologramme (z.B. ϑ_{R}, ϑ_{G}, ϑ_{B}). Die Hologramme sind jeweils so ausgelegt, dass sie möglichst effizient unter diesem Schwerpunktswinkel rekonstruieren. Um eine Schwebehöhe des Hologrammmotivs bei gleichzeitig sauberer Darstellung zu ermöglichen, ist die Verwendung von Reflexionshologrammen vorteilhaft, da die starke Filterwirkung bei Reflexionshologrammen immanent ist. Lediglich muss auf eine saubere definierte Referenzbeleuchtung geachtet werden.

**Figur 1** zeigt einen vorderen Einstiegsbereich eines PKW mit einer Einstiegsleiste.
**Figur 2** zeigt einen vorderen Einstiegsbereich eines PKW mit einer beleuchteten holographischen Einstiegsleiste.
**Figur 3** zeigt das Spektrum einer Beleuchtungsanordnung mit einer typischen RGB LED-Lichtquelle.
**Figur 4** zeigt den Rohbau eines Türrahmens mit einer Beleuchtungsanordnung ohne strahlformende Komponente.
**Figur 5** zeigt eine Detailansicht der Lichtstrahlen der Beleuchtungsanordnung ohne strahlformende Komponente und der beleuchteten reflektiven holografischen Struktur.
**Figur 6** zeigte eine Intensitätsverteilung (Beleuchtungsstärke) der Beleuchtungsstrahlen auf der holographischen Struktur bei einer Beleuchtungsanordnung ohne strahlformende Komponente.
**Figur 7** zeigt das Winkelspektrum (Lichtstärke) der Beleuchtung der reflektiven holografischen Struktur bei einer Beleuchtungsanordnung ohne strahlformende Komponente.
**Figur 8** zeigt den Rohbau eines Türrahmens mit einer Beleuchtungsanordnung mit strahlformender Komponente sowie einen Ausschnitt mit einer Vergrößerung der Beleuchtungsanordnung.
**Figur 9** zeigte eine Intensitätsverteilung (Beleuchtungsstärke) der Beleuchtungsstrahlen auf und direkt neben der holographischen Struktur bei einer Beleuchtungsanordnung mit strahlformender Komponente.
**Figur 10** zeigt das Winkelspektrum der Beleuchtung (Lichtstärke) der reflektiven holografischen Struktur bei einer Beleuchtungsanordnung mit strahlformender Komponente.
**Figur 11** zeigt schematisch die Beleuchtung der holografischen Struktur unter einem geeigneten Schwerpunktswinkel.
**Figur 12** zeigt schematisch die Beleuchtung der holografischen Struktur bei einer Beleuchtungsanordnung mit mehreren RGB-Lichtquellen übereinander, die die holografische Struktur unter einem geeigneten Schwerpunktswinkel beleuchten.
**Figur 13** zeigt die holographische Struktur als Prägehologramm mit einer roten Abdeckung, welches im Wesentlichen nur das rote Licht eines verschiedenfarbigen Spektrums nicht absorbiert.

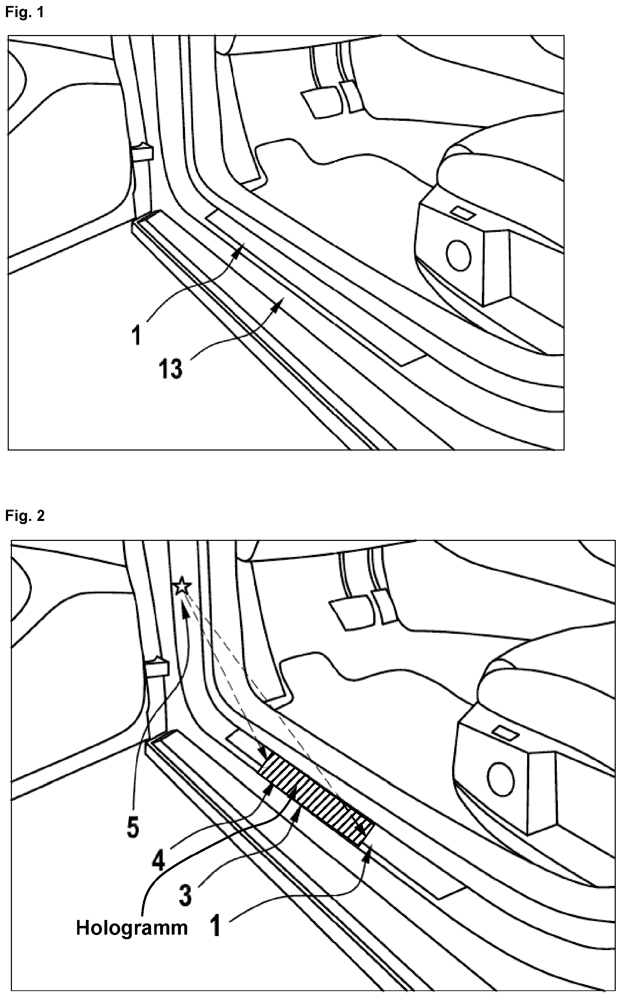

**Figur 1** zeigt einen vorderen Einstiegsbereich eines PKW mit einer Einstiegsleiste **1** in einem unteren Türrahmenabschnitt **13.**

**Figur 2** zeigt einen vorderen Einstiegsbereich eines PKW mit einer beleuchteten holographischen Einstiegsleiste **1,** die eine holographische Struktur **3** aufweist. Die holographische Leuchtfunktion **4** wird bei Beleuchtung durch die Beleuchtungsanordnung **5** erzeugt, welche in einem vorderen seitlichen Türrahmenabschnitt untergebracht ist. Die holographische Leuchtfunktion **4** kann eine Schrift sein, welche oberhalb der Einstiegsleiste 1 schwebt.

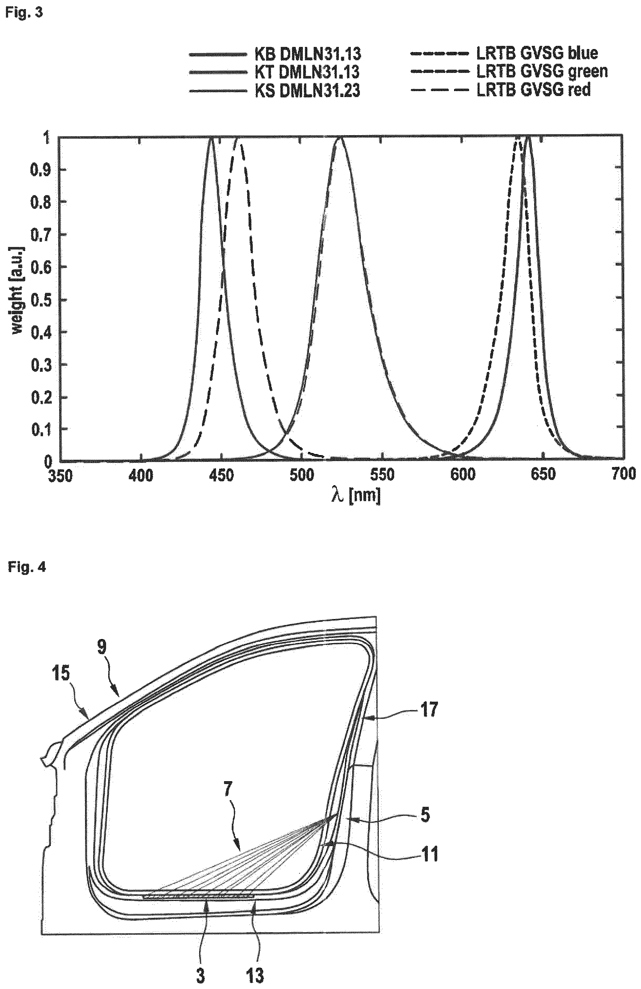

**Figur 3** zeigt das Spektrum einer Beleuchtungsanordnung mit einer typischen RGB LED-Lichtquelle. Gezeigt sind folgende, gut geeignete LEDs:
Monochrome LEDs:
Osram Synios P2720
KS DMLN31.23 (super red, λdom = 632 nm, Φ = 25 Im)
KT DMLN31.23 (true green, λdom = 528 nm, Φ = 25 Im
KB DMLN31.13 (blue, λdom = 455 nm, Φ = 10 Im)
"RGB"- LED Kombination:
   Osram MultiLED LRTB GVSG
   LRTB GVSG red (λdom = 625 nm, Φ = 2.01 Im)
   LRTB GVSG green (λdom = 528 nm, Φ = 4.48 Im)
   LRTB GVSG blue (λdom = 460 nm, Φ = 0.92 Im)
   Nicht gezeigt ist die ebenfalls geeignete "Weißlicht"-LED:
      Osram Synios P2720
      KW DMLN32 SB

**Figur 4** zeigt den Rohbau eines Türrahmens **9** mit einer Beleuchtungsanordnung **5** ohne strahlformende Komponente. Der Türrahmen weist eine A-Säule **15** und eine B-Säule **17** auf. Die holografische Struktur **3** liegt im unteren Türrahmenabschnitt **13** und wird in einem Winkel mit den Lichtstrahlen der Beleuchtungsanordnung **5** ohne strahlformende Komponente **7** beleuchtet. Die Beleuchtungsanordnung liegt im hinteren seitlichen Türrahmenabschnitt **11,** welcher Teil der B-Säule **17** ist, da es sich um eine Vordertür handelt.

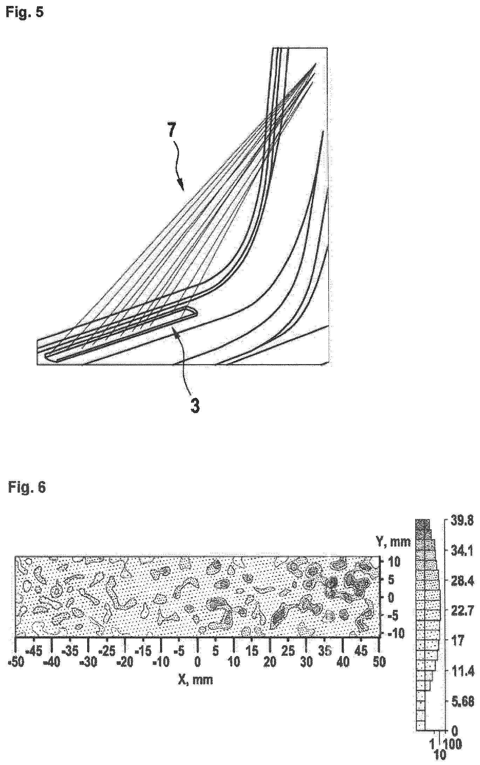

**Figur 5** zeigt eine Detailansicht der Lichtstrahlen der Beleuchtungsanordnung ohne strahlformende Komponente **7** und der beleuchteten reflektiven holografischen Struktur **3.**

**Figur 6** zeigte eine Intensitätsverteilung (Beleuchtungsstärke) der Beleuchtungsstrahlen auf der holographischen Struktur bei einer Beleuchtungsanordnung ohne strahlformende Komponente. Die Einheit ist Lux [Ix], die Skala reicht von 0 Ix bis 39.8 Ix. Es wird ersichtlich, dass die Ausleuchtung sehr homogen ist.

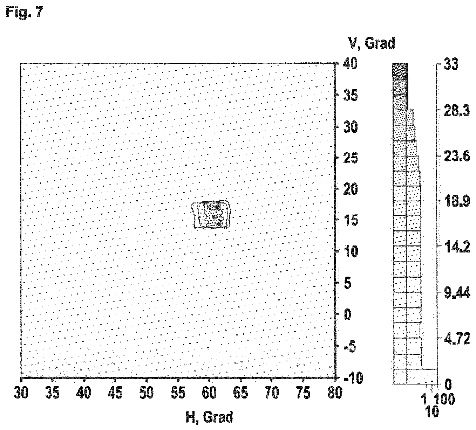

**Figur 7** zeigt das Winkelspektrum der Beleuchtung (gezeigt ist die Lichtstärke abhängig vom horizontalen bzw. vertikalen Winkel) der reflektiven holografischen Struktur bei einer Beleuchtungsanordnung ohne strahlformende Komponente. Das Winkelspektrum ist nicht sehr groß, obwohl keine strahlformende Komponente verwendet wird.

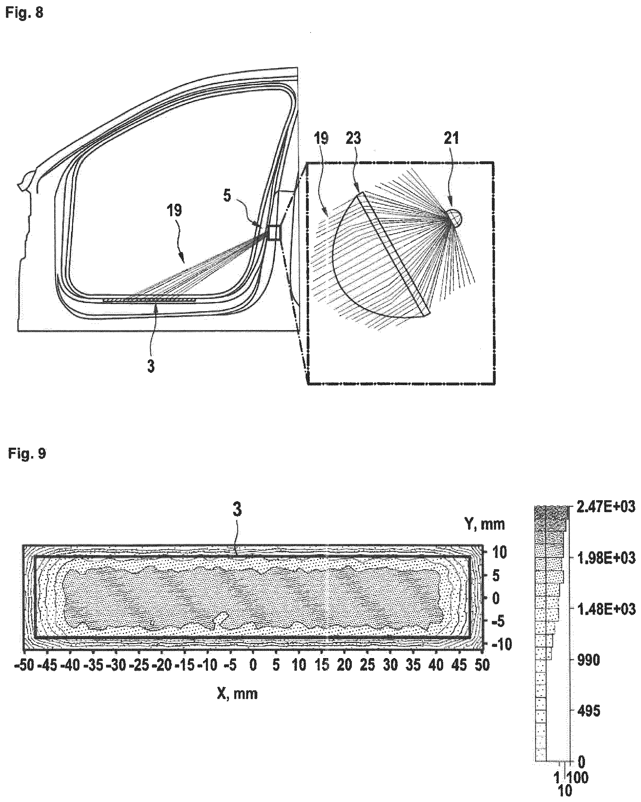

**Figur 8** zeigt den Rohbau eines Türrahmens **9** mit einer Beleuchtungsanordnung **5** mit strahlformender Komponente **23** sowie einen Ausschnitt mit einer Vergrößerung der Beleuchtungsanordnung **5.** Es kann erkannt werden, dass die Lichtstrahlen der Beleuchtungsanordnung mit strahlformender Komponente **19** optimal auf die holografische Struktur **3** ausgerichtet sind. Dies kann insbesondere erreicht werden durch eine Verwendung einer nach der Lichtquelle **21** (hier eine LED) angeordnete anamorphotische (Freiform-) Linse als strahlformende Komponente **23,** welche optimal geformt in Bezug auf die Anforderungen ist.

**Figur 9** zeigte eine Intensitätsverteilung (Beleuchtungsstärke) der Beleuchtungsstrahlen auf und direkt neben der holographischen Struktur **3** bei einer Beleuchtungsanordnung mit strahlformender Komponente. Es kann erkannt werden, dass sowohl die Homogenität im vorstehend beschriebenen Bereich liegt als auch, dass im Wesentlichen nur die holografische Struktur **3** (zu mindestens 40% bezogen auf die gesamte Beleuchtungsintensität) beleuchtet wird. Die gezeigte Ausdehnung geht in x-Richtung (horizontale Achse) von -50 mm bis + 50 mm und in y-Richtung (vertikal) - 10 mm bis + 10 mm. Die gezeigte Intensitätsskala (cd) reicht von 0 bis 2,47 x 10³ cd.

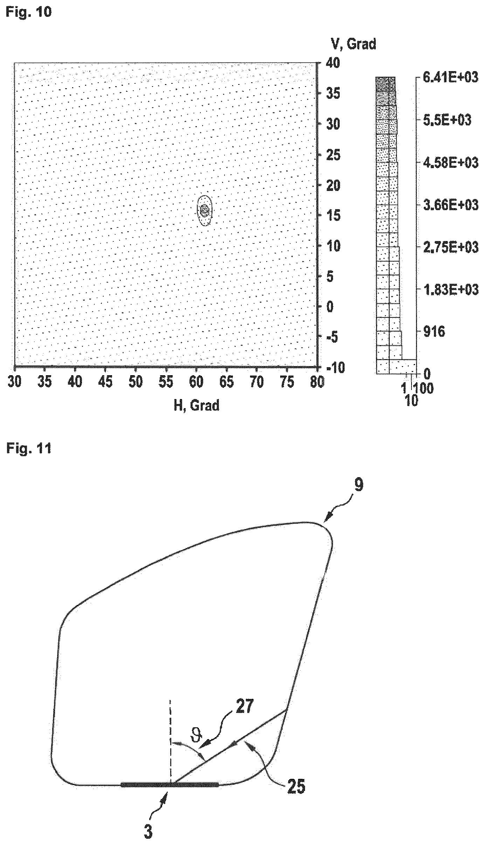

**Figur 10** zeigt das Winkelspektrum der Beleuchtung (gezeigt ist die Lichtstärke abhängig vom horizontalen bzw. vertikalen Winkel) der reflektiven holografischen Struktur bei einer Beleuchtungsanordnung mit strahlformender Komponente. Das Winkelspektrum ist noch geringer als ohne Verwendung der strahlformenden Komponente.

**Figur 11** zeigt schematisch den Türrahmen **9** mit Beleuchtung der holografischen Struktur **3** entlang einer Beleuchtungsrichtung **25** unter einem geeigneten Schwerpunktswinkel **27.**

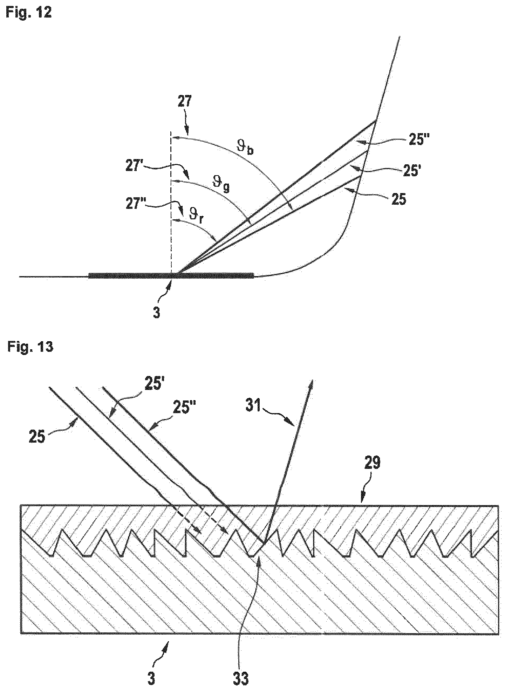

**Figur 12** zeigt schematisch die Beleuchtung der holografischen Struktur **3** bei einer Beleuchtungsanordnung **5** mit mehreren RGB-Lichtquellen übereinander, die die holografische Struktur entlang einer jeweiligen Beleuchtungsrichtung **25** (blau), **25'** (grün) und **25"** (rot) unter einem jeweils geeigneten Schwerpunktswinkel **27** (blau), **27'** (grün) und **27"** (rot) beleuchten.

**Figur 13** zeigt die holographische Struktur **3** als Prägehologramm **33** mit einer roten Abdeckung **29** (die Farbe ist im Bild durch eine diagonale Schraffierung von links unten nach rechts oben dargestellt). Das Tages- oder Umgebungslicht umfasst ein breites Spektrum, u. a. blau entlang einer Beleuchtungsrichtung **25,** grün entlang einer Beleuchtungsrichtung **25'** und rot entlang einer Beleuchtungsrichtung **25".** Natürlich sind bei Tages- bzw. Umgebungslicht auch andere Beleuchtungsrichtungen umfasst, welche jedoch nicht oder anders gebeugt werden als die gezeigte. Der nicht von der Abdeckung absorbierte, vom Hologramm gebeugte Lichtstrahl 31 ist hier nur das im gezeigten Beispiel erwünschte rote Licht, welches die holographische Leuchtfunktion erzeugt.

### BEZUGSZEICHENLISTE

- 1: Einstiegsleiste
- 3: Reflexive holographische Struktur
- 4: Holographische Leuchtfunktion
- 5: Beleuchtungsanordnung
- 7: Lichtstrahlen der Beleuchtungsanordnung ohne strahlformende Komponente
- 9: Türrahmen
- 11: Hinterer seitlicher Türrahmenabschnitt
- 13: Unterer Türrahmenabschnitt
- 15: A-Säule
- 17: B-Säule
- 19: Lichtstrahlen der Beleuchtungsanordnung mit strahlformender Komponente
- 21: Lichtquelle (LED)
- 23: Strahlformende Komponente
- 25: Beleuchtungsrichtung (Strahlungshauptrichtung)
- 27: Schwerpunktswinkel der Beleuchtung
- 29: Rote Abdeckung eines Prägehologramms
- 31: Nicht von der Abdeckung absorbierter, vom Hologramm gebeugter Lichtstrahl
- 33: Prägehologramm

## Patentansprüche

1. Türrahmen (9) für ein Fahrzeug, aufweisend eine holographische Einstiegsleiste (1) in einem unteren Türrahmenabschnitt (13), wobei die holographische Einstiegsleiste (1) ein flächiges Element mit einer Dicke senkrecht zur flächigen Ausdehnung von maximal 3 mm umfasst, welches mindestens eine flächige, reflexive holografische Struktur (3) aufweist, die eingerichtet ist zur Erzeugung einer holographischen Leuchtfunktion (4) in einem Sichtbereich,
aufweisend eine in mindestens einem seitlichen Türrahmenabschnitt angeordnete Beleuchtungsanordnung (5), welche eingerichtet ist zu einer Beleuchtung der holographischen Einstiegsleiste (1), umfassend mindestens eine Lichtquelle (21), wobei die holografische Struktur (3) eingerichtet ist für Erzeugung der holographischen Leuchtfunktion (4) bei der Beleuchtung durch die Beleuchtungsanordnung (5),
wobei Beleuchtungsanordnung (5) und holographische Einstiegsleiste (1) zueinander angeordnet sind für die Beleuchtung der holographischen Einstiegsleiste (1) unter einem Schwerpunktswinkel (27), welcher einem Brewsterwinkel der holographischen Einstiegsleiste (1) entspricht oder weniger als 10° vom Brewsterwinkel abweicht.

2. Türrahmen (9) nach dem vorherigen Anspruch, wobei die holografische Struktur (3) ein Volumenhologramm umfasst, welches bevorzugt als Hologrammstack oder als gemultiplextes Hologramm vorliegt oder wobei die holografische Struktur (3) ein Prägehologramm (33) umfasst.

3. Türrahmen (9) nach dem vorherigen Anspruch, wobei das Prägehologramm (33) in einem Element (29) umfasst ist, welches eingerichtet ist, einen Teil des sichtbaren Spektrums, der nicht zur Erzeugung der holographischen Leuchtfunktion (4) beitragen soll, überwiegend zu absorbieren.

4. Türrahmen (9) nach dem vorherigen Anspruch, wobei der seitliche Türrahmenabschnitt ein vorderer seitlicher Türrahmenabschnitt ist, insbesondere eine Verlängerung einer A-Säule (15) zum Fahrzeugboden hin oder ein unterer Abschnitt der B-Säule (17) und/oder
wobei der seitliche Türrahmenabschnitt ein hinterer seitlicher Türrahmenabschnitt (11) ist, insbesondere ein unterer Abschnitt einer B-Säule (17) zum Fahrzeugboden hin oder eine Verlängerung einer C-Säule zum Fahrzeugboden hin.

5. Türrahmen (9) nach dem vorherigen Anspruch 4, wobei zwei Beleuchtungsanordnungen (5), jeweils in einem vorderen seitlichen Türrahmenabschnitt und einem hinterem seitlichen Türrahmenabschnitt (11), umfasst sind.

6. Türrahmen nach einem oder mehreren der vorherigen Ansprüche, wobei der Schwerpunktswinkel (27) weniger als 5° vom Brewsterwinkel abweicht.

7. Türrahmen (9) nach einem oder mehreren der vorherigen Ansprüche, wobei die Beleuchtungsanordnung (5) eingerichtet ist für eine Beleuchtung der holografischen Struktur (3) mit einem Winkelspektrum um einen Schwerpunktswinkel (27), so dass mindestens 30% der Lichtstrahlen der Beleuchtungsanordnung (5), insbesondere mindestens 40 % der Lichtstrahlen der Beleuchtungsanordnung (5), die holografischen Struktur (3) ausleuchten, wobei bevorzugt eine Intensitätsverteilung des Beleuchtungslichtes homogen ist und insbesondere ein Verhältnis von minimaler Intensität zu maximaler Intensität größer als 0,8 aufweist.

8. Türrahmen (9) nach einem oder mehreren der vorherigen Ansprüche, wobei die Beleuchtungsanordnung (5) als strahlformende Komponente (23) eine anamorphotische Freiformlinse aufweist, deren Formgebung sich bevorzugt ergibt durch die Dimensionierung der holografischen Struktur (3) und/oder der Anordnung von Beleuchtungsanordnung (5) und holographischer Einstiegsleiste (1) zueinander oder wobei die Beleuchtungsanordnung (5) als strahlformende Komponente (23) eine bikonische Linse aufweist, deren Formgebung sich vorzugsweise ergibt durch die Dimensionierung der holografischen Struktur (3) und/oder der Anordnung von Beleuchtungsanordnung (5) und holographischer Einstiegsleiste (1) zueinander.

9. Türrahmen (9) nach einem oder mehreren der vorherigen Ansprüche, wobei die Lichtquelle (21) der Beleuchtungsanordnung (5) mindestens eine mehrfarbige Lichtquelle (21) und/oder mehrere untereinander verschiedenfarbige, einfarbige Lichtquellen (21) umfasst, so dass Licht in mehr als einem Farbspektrum emittiert wird, wobei die Lichtquelle (21) der Beleuchtungsanordnung (5) bevorzugt rotes, grünes und blaues Licht umfasst.

10. Türrahmen (9) nach einem oder mehreren der vorherigen Ansprüche, wobei die mindestens eine holographische Struktur (3) eingerichtet ist, für zumindest einen Teil des von der Lichtquelle (21) emittieren spektralen Bereichs mindestens eine holografische Leuchtfunktion (4) zu erzeugen, wobei bevorzugt verschiedene holografische Strukturen (3) für verschiedene spektrale Bereiche verwendet werden.

11. Türrahmen (9) nach einem oder mehreren der vorherigen Ansprüche, wobei mehrere verschiedenfarbige Lichtquellen (21) im seitlichen Türrahmenabschnitt übereinander angeordnet sind und die mindestens eine holografische Struktur (3) eingerichtet ist, die holographische Leuchtfunktion (4) der jeweiligen Lichtquelle (21) bei der jeweiligen Farbe und/oder unter dem jeweiligen Beleuchtungswinkel (27) zu erzeugen.

12. Türrahmen (9) nach einem oder mehreren der vorherigen Ansprüche, wobei der Sichtbereich angeordnet ist für die Sichtbarkeit der holografischen Leuchtfunktion (4) durch den Fahrer, den Beifahrer, eine in das Fahrzeug einsteigende Person und/oder eine aus dem Fahrzeug aussteigende Person.

13. Türrahmen (9) nach einem oder mehreren der vorherigen Ansprüche, wobei die Beleuchtungsanordnung (5) und/oder die holographische Einstiegsleiste (1) ein Verschmutzungsschutzelement gegen Verschmutzung bei verschlossener Tür aufweist, insbesondere eine Gummilippe und/oder eine Gummischürze, welche die Beleuchtungsanordnung (5) und/oder die holographische Einstiegsleiste (1) bei geschossener Tür zumindest teilweise abdeckt
und/oder
wobei die Oberfläche der holographische Einstiegsleiste (1) eingerichtet ist für einen Lotoseffekt gegen Verschmutzung der Oberfläche.

## Claims

1. Door frame (9) for a vehicle, having a holographic door sill strip (1) in a lower door frame section (13), wherein the holographic door sill strip (1) comprises a planar element having a thickness perpendicular to the planar extent of at most 3 mm, which has at least one planar, reflective holographic structure (3) that is configured to generate a holographic light function (4) in a field of view,
having an illumination arrangement (5) that is arranged in at least one lateral door frame section and is configured to illuminate the holographic door sill strip (1), comprising at least one light source (21), wherein the holographic structure (3) is configured to generate the holographic light function (4) when illuminated by the illumination arrangement (5), wherein the illumination arrangement (5) and the holographic door sill strip (1) are arranged relative to one another for the illumination of the holographic door sill strip (1) at a centroid angle (27) which corresponds to a Brewster angle of the holographic door sill strip (1) or deviates by less than 10° from the Brewster angle.

2. Door frame (9) according to the preceding claim, wherein the holographic structure (3) comprises a volume hologram, which is preferably present as a hologram stack or as a multiplexed hologram, or wherein the holographic structure (3) comprises an embossed hologram (33).

3. Door frame (9) according to the preceding claim, wherein the embossed hologram (33) is included in an element (29) which is configured to predominantly absorb a part of the visible spectrum that is not intended to contribute to the generation of the holographic light function (4).

4. Door frame (9) according to the preceding claim, wherein the lateral door frame section is a front lateral door frame section, in particular an extension of an A-pillar (15) toward the vehicle floor or a lower section of the B-pillar (17),
and/or
wherein the lateral door frame section is a rear lateral door frame section (11), in particular a lower section of a B-pillar (17) toward the vehicle floor or an extension of a C-pillar toward the vehicle floor.

5. Door frame (9) according to the preceding Claim 4, wherein two illumination arrangements (5) are comprised, in each case in a front lateral door frame section and a rear lateral door frame section (11).

6. Door frame according to one or more of the preceding claims, wherein the centroid angle (27) deviates by less than 5° from the Brewster angle.

7. Door frame (9) according to one or more of the preceding claims, wherein the illumination arrangement (5) is configured to illuminate the holographic structure (3) with an angular spectrum around a centroid angle (27), with the result that at least 30% of the light rays from the illumination arrangement (5), in particular at least 40% of the light rays from the illumination arrangement (5), light the holographic structure (3), wherein an intensity distribution of the illumination light is preferably homogeneous and in particular has a ratio of minimum intensity to maximum intensity of greater than 0.8.

8. Door frame (9) according to one or more of the preceding claims, wherein the illumination arrangement (5) has an anamorphic free-form lens as the beam-shaping component part (23), the shape of which preferably results from the dimensioning of the holographic structure (3) and/or the arrangement of the illumination arrangement (5) and the holographic door sill strip (1) relative to one another, or wherein the illumination arrangement (5) has a biconical lens as the beam-shaping component part (23), the shape of which preferably results from the dimensioning of the holographic structure (3) and/or the arrangement of the illumination arrangement (5) and the holographic door sill strip (1) relative to one another.

9. Door frame (9) according to one or more of the preceding claims, wherein the light source (21) of the illumination arrangement (5) comprises at least one multicoloured light source (21) and/or a plurality of monochromatic light sources (21) each having a different colour, so that light in more than one colour spectrum is emitted, wherein the light source (21) of the illumination arrangement (5) preferably comprises red, green and blue light.

10. Door frame (9) according to one or more of the preceding claims, wherein the at least one holographic structure (3) is configured to generate at least one holographic light function (4) for at least some of the spectral range emitted by the light source (21), wherein different holographic structures (3) are preferably used for different spectral ranges.

11. Door frame (9) according to one or more of the preceding claims, wherein a plurality of differently coloured light sources (21) are arranged one above the other in the lateral door frame section and the at least one holographic structure (3) is configured to generate the holographic light function (4) of the respective light source (21) with the respective colour and/or at the respective illumination angle (27).

12. Door frame (9) according to one or more of the preceding claims, wherein the field of view is arranged so that the holographic light function (4) can be seen by the driver, the front passenger, a person entering the vehicle, and/or a person exiting the vehicle.

13. Door frame (9) according to one or more of the preceding claims, wherein the illumination arrangement (5) and/or the holographic door sill strip (1) has a dirt protection element protecting against dirt when the door is closed, in particular a rubber lip and/or a rubber apron, which at least partially covers the illumination arrangement (5) and/or the holographic door sill strip (1) when the door is closed,
and/or
wherein the surface of the holographic door sill strip (1) is configured for a lotus effect against soiling of the surface.

## Revendications

1. Cadre de porte (9) pour un véhicule, comprenant une baguette de seuil holographique (1) dans une partie de cadre de porte inférieure (13), la baguette de seuil holographique (1) comprenant un élément plan ayant une épaisseur, perpendiculairement à l'étendue plane, d'au plus 3 mm, lequel présente au moins une structure holographique réfléchissante plane (3), qui est conçue pour générer une fonction d'éclairage holographique (4) dans un champ de vision,
comprenant un ensemble d'éclairage (5) disposé dans au moins une partie de cadre de porte latérale, lequel est conçu pour l'éclairage de la baguette de seuil holographique (1), et comprenant au moins une source lumineuse (21), la structure holographique (3) étant conçue pour générer la fonction d'éclairage holographique (4) lors de l'éclairage par l'ensemble d'éclairage (5), l'ensemble d'éclairage (5) et la baguette de seuil holographique (1) étant agencés l'un par rapport à l'autre pour éclairer la baguette de seuil holographique (1) selon un angle de centre de gravité (27), qui correspond à un angle de Brewster de la baguette de seuil holographique (1) ou s'écarte de moins de 10° de l'angle de Brewster.

2. Cadre de porte (9) selon la revendication précédente, **caractérisé en ce que** la structure holographique (3) comprend un hologramme de volume qui se présente de préférence sous la forme d'un empilement d'hologrammes ou d'un hologramme multiplexé, ou **en ce que** la structure holographique (3) comprend un hologramme estampé (33).

3. Cadre de porte (9) selon la revendication précédente, l'hologramme estampé (33) est prévu dans un élément (29) qui est conçu pour absorber de manière prédominante une partie du spectre visible qui n'est pas destinée à contribuer à la génération de la fonction d'éclairage holographique (4).

4. Cadre de porte (9) selon la revendication précédente, la partie de cadre de porte latérale étant une partie de cadre de porte latérale avant, en particulier un prolongement d'un montant A (15) vers le plancher du véhicule ou une partie inférieure du montant B (17),
et/ou
la partie de cadre de porte latérale étant une partie de cadre de porte latérale arrière (11), en particulier une partie inférieure d'un montant B (17) vers le plancher du véhicule ou un prolongement d'un montant C vers le plancher du véhicule.

5. Cadre de porte (9) selon la revendication 4, dans lequel deux ensembles d'éclairage (5) sont respectivement prévus dans une partie de cadre de porte latérale avant et une partie de cadre de porte latérale arrière (11).

6. Cadre de porte selon une ou plusieurs des revendications précédentes, dans lequel l'angle de centre de gravité (27) s'écarte de moins de 5° de l'angle de Brewster.

7. Cadre de porte (9) selon une ou plusieurs des revendications précédentes, dans lequel l'ensemble d'éclairage (5) est conçu pour éclairer la structure holographique (3) avec un spectre angulaire entourant un angle de centre de gravité (27), de telle sorte qu'au moins 30 % des rayons lumineux de l'ensemble d'éclairage (5), en particulier au moins 40 % des rayons lumineux de l'ensemble d'éclairage (5), éclairent la structure holographique (3), une distribution d'intensité de la lumière d'éclairage étant de préférence homogène et présentant en particulier un rapport entre l'intensité minimale et l'intensité maximale supérieur à 0,8.

8. Cadre de porte (9) selon une ou plusieurs des revendications précédentes, dans lequel l'ensemble d'éclairage (5) comporte, comme composant de mise en forme de faisceau (23), une lentille anamorphique de forme libre, dont le profil résulte de préférence du dimensionnement de la structure holographique (3) et/ou de l'agencement de l'ensemble d'éclairage (5) et de la baguette de seuil holographique (1) l'un par rapport à l'autre, ou dans lequel l'ensemble d'éclairage (5) comporte, comme composant de mise en forme de faisceau (23), une lentille biconique, dont le profil résulte de préférence du dimensionnement de la structure holographique (3) et/ou de l'agencement de l'ensemble d'éclairage (5) et de la baguette de seuil holographique (1) l'un par rapport à l'autre.

9. Cadre de porte (9) selon une ou plusieurs des revendications précédentes, dans lequel la source lumineuse (21) de l'ensemble d'éclairage (5) comprend au moins une source lumineuse multicolore (21) et/ou plusieurs sources lumineuses unicolores (21) de couleurs différentes les unes des autres, de telle sorte que de la lumière est émise dans plus d'un spectre de couleurs, la source lumineuse (21) de l'ensemble d'éclairage (5) comprenant de préférence de la lumière rouge, verte et bleue.

10. Cadre de porte (9) selon une ou plusieurs des revendications précédentes, dans lequel ladite au moins une structure holographique (3) est conçue pour générer au moins une fonction d'éclairage holographique (4) pour au moins une partie du domaine spectral émis par la source lumineuse (21), diverses structures holographiques (3) étant de préférence utilisées pour divers domaines spectraux.

11. Cadre de porte (9) selon une ou plusieurs des revendications précédentes, dans lequel plusieurs sources lumineuses (21) de couleurs différentes sont disposées les unes au-dessus des autres dans la partie de cadre de porte latérale et ladite au moins une structure holographique (3) est conçue pour générer la fonction d'éclairage holographique (4) de la source lumineuse (21) respective selon la couleur respective et/ou selon l'angle d'éclairage respectif (27).

12. Cadre de porte (9) selon une ou plusieurs des revendications précédentes, dans lequel la zone de vision est agencée pour la visibilité de la fonction d'éclairage holographique (4) par le conducteur, le passager avant, une personne entrant dans le véhicule et/ou une personne sortant du véhicule.

13. Cadre de porte (9) selon une ou plusieurs des revendications précédentes, dans lequel l'ensemble d'éclairage (5) et/ou la baguette de seuil holographique (1) présente un élément de protection contre la salissure évitant la salissure lorsque la porte est fermée, en particulier une lèvre en caoutchouc et/ou une jupe en caoutchouc, qui recouvre au moins partiellement l'ensemble d'éclairage (5) et/ou la baguette de seuil holographique (1) lorsque la porte est fermée,
et/ou
dans lequel la surface de la baguette de seuil holographique (1) est conçue pour obtenir un effet lotus contre la salissure de la surface.
